# DEMANDE DE BREVET EUROPEEN

(11) **EP 0 899 546 A1**
(43) Date de publication de la demande: **03.03.1999**
(21) Numéro de dépôt: 98402104.8
(22) Date de dépôt: 25.08.1998
(51) Int. Cl.: G01F 23/04

(54) **Guide de jauge, notamment pour véhicule automobile, et procédé pour sa réalisation**

(30) Priorité: 27.08.1997 FR 9710725
(71) Demandeur: Société JACOT, 25460 Etupes (FR)
(72) Inventeur: Blaise, Alain, 90100 Lebetain (FR); Caillet, Michel, 90500 Beaucourt (FR)
(74) Mandataire: CABINET BONNET-THIRION

(57) **Abrégé**

Ce guide de jauge est du genre mettant en oeuvre un tube (11), qui est métallique, et qui, à son extrémité supérieure, présente une embouchure (12) évasée.

Suivant l'invention, cette embouchure (12) appartient à un embout (13), dit embout d'entrée, qui, distinct du tube (11), est surmoulé sur celui-ci, et qui, si désiré, présente au moins une excroissance fonctionnelle (20A) formant par exemple une patte de fixation.

Application, notamment, aux guides de jauge pour véhicules automobiles.

## Description

La présente invention concerne d'une manière générale les guides de jauge du type de ceux qui sont par exemple mis en oeuvre sur le bloc moteur d'un véhicule automobile pour assurer le guidage d'une jauge d'huile, qui, introduite dans un tel guide de jauge à un endroit aisément accessible à l'opérateur, en général au niveau du carter cylindre du bloc moteur, doit pouvoir plonger dans le carter d'huile sous-jacent à ce carter cylindre, pour avoir accès au volume d'huile présent dans celui-ci.

Outre la jauge pour laquelle il a ainsi au moins initialement été plus particulièrement prévu, un tel guide de jauge est maintenant parfois aussi utilisé pour le passage d'une canule propre au remplissage ou la vidange du carter d'huile, et il doit donc être dûment prévu en conséquence, en se complétant, notamment, pour ce faire, par un prolongement allant jusqu'au fond du carter d'huile.

La présente invention concerne également les guides de jauge du type de ceux qui sont mis en oeuvre sur le bloc d'une boîte de vitesses en particulier automatique d'un véhicule automobile.

Les guides de jauge de ce type doivent satisfaire à diverses exigences fonctionnelles.

Tout d'abord, ils doivent respecter un ensemble de cotes fonctionnelles très précises.

Ensuite, ils doivent être relativement rigides, pour résister aux sollicitations mécaniques, thermiques et vibratoires, auxquelles ils sont soumis dans l'environnement du moteur, et pour un guidage précis de la jauge et/ou de la canule, qui, elles, sont le plus souvent flexibles.

Pour ce faire, ils sont formés pour l'essentiel d'un tube métallique, qui est en pratique en acier, et qui est dûment conformé.

Mais, pour faciliter l'introduction de la jauge et de la canule, ce tube doit présenter, à son extrémité supérieure, une embouchure évasée.

A ce jour, cette embouchure évasée résulte directement d'une mise en forme de l'extrémité supérieure du tube, par expansion radiale de celle-ci.

Cela implique que le tube mis en oeuvre soit en acier de ductilité relativement élevée et présente initialement une épaisseur minimale pour satisfaire à l'expansion nécessaire, ce qui, indépendamment d'une retouche d'usinage le plus souvent indispensable pour parfaire l'embouchure après cette expansion, grève inévitablement le coût de l'ensemble.

L'extrémité supérieure de la partie évasée peut en outre devoir assurer une étanchéité intérieure par coopération avec un bouchon situé en partie supérieure de la jauge.

Il faut ensuite que le tube mis en oeuvre puisse être fixé à un quelconque support de manière rigide ou semi-rigide.

Il est usuel, pour ce faire, de le doter d'une patte de fixation en acier, en rapportant celle-ci par brasage ou soudage.

Cela implique que ce tube soit initialement nu, et, donc, que, une fois l'ensemble fini, il soit appliqué, sur cet ensemble fini, un revêtement complémentaire propre à répondre à des exigences données de résistance à la corrosion et de glissement, tel que par exemple un zingage, un revêtement de matière synthétique ou autre.

Cela implique également la création inévitable de calamine et de résidus d'oxydation, ce qui peut ensuite nécessiter une opération de dépollution, pour éviter ultérieurement toute contamination intempestive du bain d'huile concerné.

Ces opérations de revêtement et de dépollution sont inévitablement coûteuses, ce qui grève encore intempestivement le coût de l'ensemble.

Il faut, enfin, que le tube mis en oeuvre présente, extérieurement, au voisinage de son extrémité inférieure, une collerette, dite ci-après par simple commodité collerette d'arrêt, notamment pour permettre l'obtention à son niveau d'une certaine étanchéité, par exemple si l'ensemble doit être engagé dans un autre composant.

Pour permettre une fixation sans contrainte du guide de jauge, des cotes fonctionnelles précises peuvent être exigées entre la patte de fixation précédemment évoquée et par exemple l'axe du tube au niveau de la face d'étanchéité de la collerette d'arrêt.

A ce jour, cette collerette d'arrêt est, soit formée par le tube lui-même, par une déformation locale de celui-ci, ce qui implique, comme précédemment, avec les inconvénients mentionnés, que ce tube soit en acier de ductilité relativement élevée, soit formée par une pièce dûment rapportée par brasage ou soudage sur ce tube, avec, également, les inconvénients succinctement évoqués ci-dessus pour un tel mode d'assemblage.

Dans d'autres réalisations connues, l'embouchure et/ou la collerette d'arrêt appartiennent à des pièces qui, distinctes du tube, sont rapportées sur celui-ci par encliquetage ou par collage.

Les réalisations correspondantes sont relativement complexes et coûteuses, sans cependant présenter en toute certitude toute la précision d'exécution par ailleurs requise.

La présente invention a d'une manière générale pour objet une disposition permettant d'éviter ces inconvénients tout en conduisant à d'autres avantages.

De manière plus précise, elle a tout d'abord pour objet un guide de jauge, notamment pour véhicule automobile, du genre mettant en oeuvre un tube métallique, qui, à son extrémité supérieure, présente une embouchure évasée pour que l'engagement d'une quelconque jauge ou quelconque canule se trouve facilité, ce guide de jauge étant d'une manière générale caractérisé en ce que cette embouchure appartient à un embout, dit ci-après par simple commodité embout d'entrée, qui, distinct du tube, est en matière synthétique rigide et fixé sur celui-ci par surmoulage, cette embouchure étant formée par un tronçon de la surface interne de cet embout d'entrée dont le diamètre va en augmentant au fur et à mesure que cet embout d'entrée s'éloigne du tube, la surface interne dudit embout étant quasiment en continuité avec la surface interne du tube.

On a déjà proposé d'équiper, par exemple dans les documents DE-A- 2 547 177, US-A- 3 098 254, US-A- 3 591 886, US-A- 4 155 167, un tube de jauge, à sa partie supérieure, d'un embout en matière synthétique ; en général, ces embouts sont rapportés sur un tube déjà existant sur un véhicule, par emmanchement ou par collier de serrage, pour équiper celui-ci d'un dispositif d'essuyage de jauge : l'embout est alors en une matière souple permettant d'essuyer la jauge par pincement de l'embout entre deux doigts ; une telle disposition, telle que décrite notamment dans les trois premiers documents cités ci-dessus, ne favorise pas le guidage de la jauge, généralement mince, métallique et flexible ; ce guidage est encore moins assuré lorsque la surface interne dudit embout n'est pas quasiment en continuité avec la surface interne du tube, comme c'est le cas de l'embout selon le document DE-A 2 547 177 ou US-A-4 155 167.

L'embout d'entrée surmoulé selon l'invention est avantageusement à même de satisfaire, par lui-même, c'est-à-dire sans apport d'autre composant, et sans intervention sur le tube, à l'exigence fonctionnelle exigée pour l'embouchure qu'il forme.

Ainsi, il est avantageusement possible de mettre en oeuvre un tube en acier plus économique que celui normalement nécessaire lorsque des caractéristiques particulières de ductilité sont à satisfaire.

En outre, ce tube en acier peut avantageusement présenter une épaisseur relativement réduite, puisqu'il n'a pas à subir une quelconque expansion.

Mais l'embout d'entrée suivant l'invention peut également avantageusement satisfaire, par lui-même, et sans aucun surcoût, à d'autres exigences fonctionnelles.

L'embouchure peut se poursuivre du côté évasé par une partie tubulaire de diamètre intérieur garanti avec précision pour assurer l'étanchéité intérieure du guide de jauge au moyen d'un bouchon par exemple solidaire de la partie supérieure de la jauge.

Le diamètre extérieur de cette partie tubulaire peut également être maintenu constant sans difficulté.

Suivant un développement de l'invention, l'embout d'entrée comporte en outre, extérieurement, d'un seul tenant, au moins une excroissance fonctionnelle ne formant qu'une seule et même pièce avec lui.

Par exemple, cette excroissance fonctionnelle est une patte de fixation ajourée d'un trou.

Ainsi, tout assemblage par brasage ou soudage est évité pour cette patte de fixation.

Il en résulte que le tube mis en oeuvre peut avantageusement être pré-revêtu, ce qui évite toute opération de revêtement complémentaire ultérieure.

Il en résulte, également, que l'opération de dépollution éventuellement nécessaire pour l'élimination de calamine et de résidus d'oxydation est avantageusement évitée.

Conjointement, la liaison au tube de l'embout d'entrée suivant l'invention résulte très efficacement, et très simplement, du retrait de la matière mise en oeuvre pour la réalisation de cet embout d'entrée, la matière synthétique pouvant être dûment choisie à cet effet.

Dans tous les cas, l'opération de surmoulage correspondante peut aisément être contrôlée très rigoureusement, en sorte que l'embout d'entrée obtenu présente de lui-même toute la précision d'exécution nécessaire, sans nécessiter une quelconque retouche.

Suivant un autre développement de l'invention, la collerette d'arrêt prévue au voisinage de l'extrémité inférieure du tube peut elle-même appartenir à un embout, dit ci-après par simple commodité embout de sortie, qui, distinct du tube, est lui aussi en matière synthétique et fixé sur celui-ci par surmoulage.

Par exemple, cet embout de sortie peut se réduire à cette collerette d'arrêt.

Mais il peut également se prolonger avantageusement au-delà du tube et être alors mis à profit pour présenter, extérieurement, au moins un accident de surface fonctionnel, tel que, par exemple, une rainure de nature à permettre le logement d'un joint d'étanchéité ou une nervure de nature à faciliter un quelconque assemblage.

La collerette d'arrêt peut elle-même se prolonger latéralement par un appendice ajouré d'un trou et former ainsi par elle-même une patte de fixation.

Ainsi, le champ d'application d'un tel embout de sortie se trouve avantageusement élargi.

Suivant encore un autre développement de l'invention, la patte de fixation mentionnée plus haut peut être disjointe et donc distincte de l'embout d'entrée et, en matière synthétique, être surmoulée directement sur le tube.

Lorsque le tube que comporte le guide de jauge suivant l'invention présente ainsi un embout d'entrée et un embout de sortie, la présente invention a encore pour objet un procédé de réalisation de l'ensemble suivant lequel cet embout d'entrée et de sortie sont surmoulés en une seule et même opération.

Lorsque le guide de jauge suivant l'invention présente une patte de fixation distincte des embouts d'entrée et/ou de sortie, la présente invention a en outre pour objet un procédé de réalisation de l'ensemble suivant lequel ladite patte est surmoulée dans la même opération que le surmoulage de l'embout d'entrée et/ou celui de sortie.

Il en résulte avantageusement une fabrication particulièrement économique de ce guide de jauge.

Les caractéristiques et avantages de l'invention ressortiront d'ailleurs, de la description qui va suivre, à titre d'exemple, en référence aux dessins schématiques annexés sur lesquels :
la figure 1 est une vue en élévation d'un guide de jauge suivant l'invention ;
la figure 2 en est une vue de côté, suivant la flèche II de la figure 1 ;
la figure 3 en est une vue de dessus, suivant la flèche III de la figure 2 ;
la figure 4 en est, à échelle supérieure, une vue partielle en coupe axiale, suivant la ligne IV-IV de la figure 1 ;
la figure 5 en est, à la même échelle que celle de la figure 4, une autre vue partielle en coupe axiale, suivant la ligne V-V de la figure 1 ;
la figure 6 est une vue partielle en coupe axiale analogue à celle de la figure 4, pour une variante de réalisation ;
la figure 7 est une vue partielle en coupe axiale analogue à celle de la figure 5, pour une autre variante de réalisation ;
la figure 8 est une vue partielle en plan-coupe de cette variante de réalisation, suivant la ligne VIII-VIII de la figure 7 ;
la figure 9 est une autre vue partielle en coupe axiale analogue à celle de la figure 5, pour une autre variante de réalisation.

Tel qu'illustré sur ces figures, et de manière connue en soi, le guide de jauge 10 suivant l'invention met en oeuvre un tube 11, qui est métallique, et qui, à son extrémité supérieure, et suivant des dispositions décrites plus en détail ultérieurement, présente une embouchure 12 évasée, pour que l'engagement d'une quelconque jauge, non représentée, ou d'une quelconque canule, également non représentée, se trouve facilité.

Dans la forme de réalisation représentée, le tube 11 n'est pas rectiligne.

Au contraire, pour satisfaire à un cheminement donné, qui est par exemple imposé par un environnement plus ou moins encombré, ce tube 11 est plus ou moins contourné.

Autrement dit, ses extrémités supérieure et inférieure ne sont pas alignées l'une avec l'autre, leurs axes s'étendant au contraire dans des plans différents en faisant en outre un certain angle entre eux.

Suivant l'invention, l'embouchure 12 appartient à un embout 13, dit ici embout d'entrée, qui, distinct du tube 11, est surmoulé sur celui-ci, cette embouchure 12 étant formée par un tronçon de la surface interne de cet embout d'entrée 13 dont le diamètre D1 va en augmentant au fur et à mesure que cet embout d'entrée 13 s'éloigne du tube 11.

Dans les formes de réalisation représentées, entre le tube 11 et le tronçon formant l'embouchure 12, la surface interne de l'embout d'entrée 13 présente un tronçon de raccordement 14, qui est cylindrique.

Préférentiellement, et cela est le cas dans les formes de réalisation représentées, le diamètre D2 du tronçon de raccordement 14 de la surface interne de l'embout d'entrée 13 est sensiblement égal au diamètre interne D3 du tube 11, en sorte que la surface interne de l'embout d'entrée 13 est ainsi avantageusement en continuité avec la surface interne du tube 11.

Dans les formes de réalisation représentées, la surface interne de l'embout d'entrée 13 présente, au-delà du tronçon formant l'embouchure 12 par rapport au tube 11, un tronçon d'extrémité 15, qui est cylindrique, et dont le diamètre D4 est identique au plus grand diamètre D1 de l'embouchure 12, donc supérieur à celui D2 du tronçon de raccordement 14.

Par exemple, et tel que représenté, le diamètre D4 de ce tronçon d'extrémité 15 est supérieur au diamètre interne D3 du tube 11, et, au débouché de l'ensemble, son arête interne est abattue par un chanfrein 16.

Le diamètre D4 du tronçon d'extrémité 15 est garanti avec précision pour permettre l'étanchéité intérieure par coopération avec un bouchon solidaire de la partie supérieure de la jauge.

Quoi qu'il en soit, dans les formes de réalisation représentées, le diamètre D1 de l'embouchure 12 évolue de manière uniforme du diamètre D2 du tronçon de raccordement 14 au diamètre D4 du tronçon d'extrémité 15.

Autrement dit, cette embouchure 12 est globalement tronconique, tout en se reliant par des congés arrondis au tronçon de raccordement 14 et au tronçon d'extrémité 1 5.

Quoi qu'il en soit, également, l'embout d'entrée 13 est, par surmoulage, en prise avec le tube 11, par un tronçon 17 plus ou moins allongé.

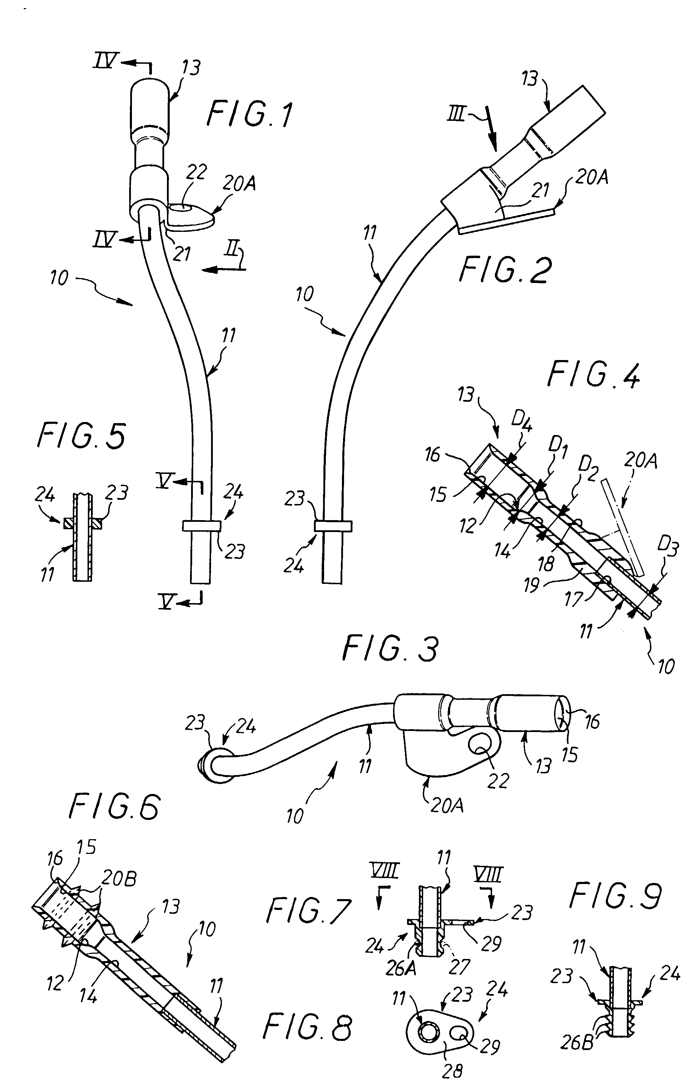

Dans la forme de réalisation plus particulièrement représentée sur les figures 1 à 5, l'embout d'entrée 13 comporte, annulairement, en creux sur sa surface extérieure, dans la zone médiane de celle-ci, pour des raisons de moulage, une rainure 18 dont il résulte que, abstraction d'une zone 19 épaissie comportant le tronçon 17 de sa surface intérieure par lequel il est en prise avec le tube 11, il a une épaisseur sensiblement constante malgré l'évasement du tronçon de cette surface intérieure formant l'embouchure 12.

Suivant l'invention, l'embout d'entrée 13 comporte, par ailleurs, extérieurement, d'un seul tenant, au moins une excroissance fonctionnelle 20A, 20B ne formant, par moulage, qu'une seule et même pièce avec lui.

Dans la forme de réalisation plus particulièrement représentée sur les figures 1 à 5, une seule excroissance fonctionnelle 20A est prévue, et il s'agit d'une patte de fixation, sensiblement plane, qui s'étend globalement en biais par rapport au tube 11, et, donc, par rapport à l'embout d'entrée 13, en se raccordant à celui-ci par un flasque 21 formant une équerre avec elle, et qui, au voisinage de son extrémité libre, est ajourée d'un trou 22.

Par exemple, et tel que représenté, ce trou 22 est allongé en boutonnière.

Enfin, dans les formes de réalisation représentées, le tube 11 présente, extérieurement, au voisinage de son extrémité inférieure, une collerette 23, dite ici par simple commodité collerette d'arrêt.

Suivant l'invention, cette collerette d'arrêt 23 appartient à un embout 24, dit ici par simple commodité embout de sortie, qui, distinct du tube 11, est, comme l'embout d'entrée 13, surmoulé sur ce tube 11.

Dans la forme de réalisation plus particulièrement représentée sur les figures 1 à 5, l'embout de sortie 24 se réduit à la collerette d'arrêt 23.

Pour permettre une fixation sans contrainte mécanique du guide de jauge 10 sur le moteur, le guide de jauge 10 respecte un ensemble de cotes fonctionnelles entre le point de la face inférieure de la collerette 23 situé sur l'axe du tube 11 et un point de référence sur la face inférieure de l'excroissance fonctionnelle ou patte 20A.

Suivant l'invention, le tube 11 est, préférentiellement, un tube en acier soudé pré-revêtu.

Conjointement, l'embout d'entrée 13 et l'embout de sortie 24 sont en matière synthétique, par exemple en polyamide.

Quoi qu'il en soit, leur liaison avec le tube 11 est assuré par le retrait de la matière qui les constitue.

Si désiré, cette liaison peut, suivant l'invention, être confortée par une fusion du revêtement du tube 11 au contact de la matière surmoulée, c'est-à-dire de la matière constitutive de l'embout d'entrée 13 et/ou de l'embout de sortie 24, ce revêtement étant alors choisi pour être favorable à une bonne adhérence de cette matière.

Suivant l'invention, les deux embouts d'entrée 13 et de sortie 24 sont, par ailleurs, préférentiellement surmoulés en une seule et même opération, au sein d'un seul et même moule.

Dans la variante de réalisation représentée sur la figure 6, l'excroissance fonctionnelle 20B que comporte extérieurement l'embout d'entrée 13 est une nervure, qui s'étend annulairement tout autour de cet embout 13, pour faciliter un éventuel assemblage ou une éventuelle fixation.

Par exemple, et tel que représenté, l'embout d'entrée 13 comporte, ainsi, échelonnées sur sa hauteur, plusieurs excroissances fonctionnelles 20B.

Dans la forme de réalisation représentée, ces excroissances fonctionnelles 20B sont au nombre de deux, et, en section transversale, elles ont un profil triangulaire.

Par ailleurs, dans cette forme de réalisation, l'embout d'entrée 13 a sensiblement la même épaisseur sur toute sa longueur, sans être épaissi au droit du tronçon 17 de sa surface intérieure par lequel il est en prise avec le tube 11, et, donc, sans présenter une quelconque rainure en creux sur sa surface extérieure.

Pour le reste, les dispositions sont du même type que les précédentes.

Dans les variantes de réalisation représentées sur les figures 7 à 9, l'embout de sortie 24 se prolonge au-delà du tube 11 et présente, extérieurement, au moins un accident de surface fonctionnel 26A, 26B.

Par exemple, figures 7 et 8, un seul accident de surface fonctionnel 26A est prévu, et il s'agit d'une rainure, qui s'étend annulairement tout autour de l'embout de sortie 24, et qui, si désiré, est propre à l'implantation d'un quelconque joint d'étanchéité 27, tel que schématisé en traits interrompus sur la figure 7.

En variante, figure 9, plusieurs accidents de surface fonctionnel 26B sont prévus, et il s'agit de nervures, qui, échelonnées en hauteur sur l'embout de sortie 24, s'étendent annulairement tout autour de celui-ci, pour un éventuel encliquetage ou une éventuelle fixation.

Dans tous les cas, la collerette d'arrêt 23 s'étend radialement en saillie sur l'embout de sortie 24.

Dans la forme de réalisation plus particulièrement représentée sur les figures 7 et 8, cette collerette d'arrêt 23 se prolonge latéralement par un appendice 28 ajouré d'un trou 29 et forme ainsi une patte de fixation.

Par exemple, et tel que représenté, ce trou 29 est allongé en boutonnière.

Bien entendu, la présente invention ne se limite pas aux formes de réalisation décrites et représentées, mais englobe toute variante d'exécution et/ou de combinaison de leurs divers éléments.

## Revendications

1. Guide de jauge, notamment pour véhicule automobile, du genre mettant en oeuvre un tube (11) métallique, qui, à son extrémité supérieure, présente une embouchure (12) évasée pour que l'engagement d'une quelconque jauge ou quelconque canule se trouve facilité, caractérisé en ce que cette embouchure (12) appartient à un embout (13), dit ici embout d'entrée, qui, distinct du tube (11), est en matière synthétique rigide et fixé sur celui-ci par surmoulage, cette embouchure (12) étant formée par un tronçon de la surface interne de cet embout d'entrée (13) dont le diamètre (D1) va en augmentant au fur et à mesure que cet embout d'entrée (13) s'éloigne du tube (11), la surface interne dudit embout (13) étant quasiment en continuité avec la surface interne du tube (11).

2. Guide de jauge suivant la revendication 1, caractérisé en ce que, entre le tube (11) et le tronçon formant l'embouchure (12), la surface interne de l'embout d'entrée (13) présente un tronçon de raccordement (14), qui est cylindrique, et dont le diamètre (D2) est sensiblement égal au diamètre interne (D3) du tube (11).

3. Guide de jauge suivant l'une quelconque des revendications 1 ou 2, caractérisé en ce que, au-delà du tronçon formant l'embouchure (12) par rapport au tube (11), la surface interne de l'embout d'entrée (13) présente un tronçon d'extrémité (15), qui est cylindrique, et dont le diamètre (D4) est identique au plus grand diamètre (D1) de l'embouchure (12).

4. Guide de jauge suivant la revendication 3, caractérisé en ce que le diamètre (D4) du tronçon d'extrémité (15) de la surface interne de l'embout d'entrée (13) est supérieur au diamètre interne (D3) du tube (11).

5. Guide de jauge suivant l'une quelconque des revendications 1 à 4, caractérisé en ce que l'embout d'entrée (13) comporte, extérieurement, d'un seul tenant, au moins une excroissance fonctionnelle (20A, 20B) ne formant qu'une seule et même pièce avec lui.

6. Guide de jauge suivant la revendication 5, caractérisé en ce que l'excroissance fonctionnelle (20A) est une patte de fixation ajourée d'un trou (22).

7. Guide de jauge suivant la revendication 5, caractérisé en ce que l'excroissance fonctionnelle (20B) est une nervure qui s'étend annulairement tout autour de l'embout d'entrée (13).

8. Guide de jauge suivant la revendication 7, caractérisé en ce que l'embout d'entrée (13) comporte, échelonnées sur sa hauteur, plusieurs excroissances fonctionnelles (20B).

9. Guide de jauge suivant l'une quelconque des revendications 1 à 8, caractérisé en ce que, le tube (11) présentant, extérieurement, au voisinage de son extrémité inférieure, une collerette d'arrêt (23), cette collerette d'arrêt (23) appartient à un embout (24), dit ici embout de sortie, qui, distinct du tube (11), est en matière synthétique et fixé sur ce tube (11) par surmoulage.

10. Guide de jauge suivant la revendication 9, caractérisé en ce que l'embout de sortie (24) se réduit à la collerette d'arrêt (23).

11. Guide de jauge suivant la revendication 9, caractérisé en ce que l'embout de sortie (24) se prolonge au-delà du tube (11) et présente, extérieurement, au moins un accident de surface fonctionnel (26A, 26B).

12. Guide de jauge suivant l'une quelconque des revendications 9 à 11, caractérisé en ce que la collerette d'arrêt (23) se prolonge latéralement par un appendice (28) ajouré d'un trou (29) et forme ainsi une patte de fixation.

13. Guide de jauge suivant l'une quelconque des revendications 1 à 4, caractérisé en ce qu'il comporte une patte de fixation, en matière synthétique, directement surmoulée sur le tube (11).

14. Guide de jauge suivant l'une quelconque des revendications 1 à 13, caractérisé en ce que le tube (11) est un tube en acier soudé pré-revêtu.

15. Procédé pour la réalisation d'un guide de jauge conforme aux revendications 1 et 9 prises conjointement, caractérisé en ce que l'un et l'autre des deux embouts d'entrée (13) et de sortie (24) que doit comporter son tube (11) sont surmoulés en une seule et même opération.

16. Procédé pour la réalisation d'un guide de jauge conforme à la revendication 13 prise conjointement avec l'une des revendications 1 ou 9, caractérisé en ce que ladite patte de fixation est surmoulée dans la même opération que le surmoulage de l'embout d'entrée (13) et/ou celui de sortie (24).

17. Procédé pour la réalisation d'un guide de jauge conforme à l'une des revendications 15 ou 16, caractérisé en ce que le revêtement du tube (11) est choisi pour être favorable à une bonne adhérence de la matière surmoulée.
